# EUROPÄISCHE PATENTSCHRIFT

(11) **EP 0 908 092 B1**
(45) Veröffentlichungstag und Bekanntmachung des Hinweises auf die Patenterteilung: **03.03.2004**
(21) Anmeldenummer: 98117060.8
(22) Anmeldetag: 09.09.1998
(51) Int. Cl.: A01J 21/02

(54) **Verfahren zur Herstellung von flachen Formstücken aus Butter oder Lebensmittelmassen ähnlicher Konsistenz und flache Formstücke aus Lebensmittelmasse**
Method for producing flat blocks of butter or foodstuffs of similar consistency and flat blocks of foodstuff
Dispositif de fabrication de blocs de forme plate de beurre ou produits alimentaire de consistence semblable et blocs de forme plate de produits alimentaires

(30) Priorität: 16.09.1997 DE 19740737
(43) Veröffentlichungstag der Anmeldung: 14.04.1999
(73) Patentinhaber: Meggle GmbH, D-83512 Wasserburg (DE)
(72) Erfinder: Salzer, Frank, 83533 Edling (DE); Neumeyer, Reiner, 83530 Schnaitsee (DE); Hellmann, Alexander, 83512 Wasserburg (DE)
(74) Vertreter: Ruttensperger, Bernhard, Dipl.-Phys.

(56) Entgegenhaltungen:
- DE-A- 2 351 035
- FR-A- 2 736 510
- US-A- 5 312 641

## Beschreibung

Die Erfindung betrifft ein Verfahren zur Bereitstellung von flachen Formstücken aus Butter oder Lebensmittelmassen ähnlicher Konsistenz, insbesondere zum Belegen von Gebäckstücken, durch Ausformen der Formstücke und anschließendes Abkühlen der Formstücke bis auf einen Erstarrungszustand, in welchem die Formstücke als feste Körper händisch oder maschinell handhabbar sind.

Es ist bekannt, Butterformstücke in Blütenform dadurch herzustellen, daß durch Erwärmung in fließfähigen Zustand gebrachte Butter durch Flüssigdosierung in Formnäpfe eingebracht und die Formnäpfe sodann einer Kühlung in einem Kühlkanal unterworfen werden. Durch die Abkühlung tritt eine Lösung der Formstückflächen von den Begrenzungsflächen der Formnäpfe ein, so daß die Formnäpfe sodann durch Kippen entleert werden können.

Dieses Verfahren ist insofern aufwendig, als für die Herstellung jedes Formstücks ein besonderer Formgebungsnapf zur Verfügung gestellt werden muß, der erst dann für erneute Benutzung verfügbar wird, wenn die Abkühlung beendet ist. Es ist deshalb ein sehr großer Napf- und damit Kostenaufwand zu beklagen. Nachteilig bei dem bekannten Verfahren kann weiterhin sein, daß zur Herbeiführung des flüssigen Zustands eine Temperatureinwirkung stattfindet, die zur Veränderung der Butterqualität bzw. der Qualität der jeweils behandelten anderen Formmassen führen kann.

Aus der FR-A-2 736 510 ist ein Verfahren zur Bereitstellung von flachen Formstücken aus Butter oder Lebensmittelmassen ähnlicher Konsistenz bekannt, in dem Lebensmittelmassen aus einem Vorratsbehälter in Dosierungszellen während einer Zellenfüllphase eingefüllt werden, in welcher die Dosierungszelle einen Füllzustand einnimmt, in dem sie mit dem Vorratsbehälter in Füllverbindung steht, im Übrigen aber im Wesentlichen geschlossen ist. Die Dosierungszellen werden annähernd vollständig gefüllt. Die Dosierungszellen sind napfartig ausgebildet, indem eine mit Löchern versehene Formplatte an einer Seite durch eine Stützplatte bedeckt ist. In einer auf die Zellenfüllphase folgenden Abgabephase wird die Formplatte gegen die Stützplatte verschoben, so dass die in den Löchern der Formplatten enthaltenen Formstücke mit Hilfe entsprechender Auslösekolben aus der Formplatte herausgelöst werden können.

Aus der DE 23 51 035 A ist ein Lebensmittelmasseformstück aus Streichfett oder Lebensmittelmasse ähnlicher Konsistenz in Form einer Flachscheibe mit einer Dicke annähernd entsprechend einer beim Bestreichen von Brot üblichen Bestreichungsdicke und mit einem Flächeninhalt und einer Umrissform geeignet zum Belegen von Gebäck bekannt. Das Formstück ist im tiefgekühlten Zustand für die Handhabung beim Belegen hinreichend starr.

Der Erfindung liegt die Aufgabe zugrunde, Formstücke aus einer durch Temperaturvariation wahlweise verformbaren und härtbaren Lebensmittelmasse mit geringerem Variationsbereich der Temperatur zwischen der jeweiligen Maximaltemperatur beim Dosierungsvorgang und der jeweiligen Minimaltemperatur zur Erreichung des Festkörperzustands herzustellen und dabei den Herstellungsvorgang hinsichtlich des apparativen Aufwands zu vereinfachen.

Zur Lösung dieser Aufgabe wird erfindungsgemäß vorgeschlagen, daß die jeweilige Lebensmittelmasse aus einem Vorratsbehälter in mindestens eine Dosierungszelle bis zu deren annähernd vollständigen Füllung während einer Zellenfüllphase eingefüllt wird, während welcher die Dosierungszelle einen Füllzustand einnimmt, in dem sie mit dem Vorratsbehälter in Füllverbindung steht, im übrigen aber im wesentlichen geschlossen ist,
daß hierauf während einer Umstellphase die Dosierungszelle in einen Abgabezustand umgestellt wird, in dem sie in Abgabeverbindung mit einem von der Dosierungszelle zu einem Ausflußquerschnitt hin verjüngten Formgebungskanal steht, im übrigen aber wieder im wesentlichen vollständig geschlossen ist,
daß nach Erreichen dieses Abgabezustands während einer Ausstoßphase durch Verkleinerung des Zellenvolumens ein entsprechendes Dosierungsvolumen der Lebensmittelmasse aus der Dosierungszelle in den Formgebungskanal ausgestoßen wird,
daß der Formgebungskanal derart auf die rheologischen Eigenschaften der Lebensmittelmasse abgestimmt wird,
daß am Kanalausgang in jeder Verdrängungsphase ein Vorschubüberstand entsteht, welcher über den gesamten Querschnitt des Kanalausgangs annähernd konstante Vorschubhöhe besitzt,
daß der jeweilige Vorschubüberstand durch ein sich in oder nahe der Kanalausgangsfläche bewegendes Schneidorgan nach jeweils mindestens einer Verdrängungsphase abgeschnitten wird und zum freien Fall auf einen Förderer freigegeben wird,
daß die so auf den Förderer gelangenden Formstücke mit einem dem Kanalausgangsquerschnitt entsprechenden Umriß und einer der Vorschubhöhe oder einem Vielfachen der Vorschubhöhe entsprechenden Dicke einer Kühlvorrichtung zugeführt werden, nach Abkühlen aus der Kühlvorrichtung entnommen und unter Beibehaltung des Erstarrungszustands in Richtung auf einen Verwendungsort transportiert werden.

Bei dem erfindungsgemäßen Verfahren kann Butter beispielsweise bei einer Temperatur von + 14°C portioniert werden und danach auf eine Temperatur von -18°C gebracht werden, wo bereits eine hinreichende Härtung eingetreten ist. Die Temperatur von -18°C entspricht dabei denjenigen Temperaturen, die normalerweise in Transportwagen für Tiefkühlkost aufrecht erhalten werden, so daß die Butterformstücke in herkömmlichen Kühlwagen von Tiefkühlkost-Spediteuren zum Verbrauchsort transportiert werden können, z.B. zu einer Bäckerei, in der beispielsweise bei der Herstellung von Butterbrezen Formstücke der Butter zwischen die Schnittflächen von in ihrer Hauptebene gespaltenen Brezen eingelegt werden, um so das lästige Bestreichen der Butterbrezen zu vermeiden. Die Formstücke besitzen eine Dicke, welche gleich oder etwas größer ist als die beim Bestreichen von Brezen, Semmeln, Hörnchen, Croissants, Baguettes und dergleichen übliche Auftragsdicke. Bei dieser geringen Dicke wärmt sich die Butter in der Umgebung relativ rasch auf Verzehrtemperatur auf. Auch wenn die Butterbrezen in einem Kühlschrank gelagert werden, tritt eine Aufwärmung auf Temperaturen ein, wie sie normalerweise im Kühlschrank zur Frischhaltung von Butter angewandt wird. Besonders rasch werden die belegten Gebäckstücke verzehrfertig, wenn das Auflegen der Butterformstücke auf noch backofenwarme Gebäckstücke erfolgt.

Von wesentlicher Bedeutung bei der Herstellung der Formstücke ist, daß in dem Vorratsbehälter ein annähernd konstanter Fülldruck aufrechterhalten wird. Dadurch wird sichergestellt, daß die Dosierungszelle während deren Füllphase mit einer im wesentlichen konstanten Füllgeschwindigkeit vollständig gefüllt wird, was für die Gleichmäßigkeit der zu erzeugenden Formstücke und einen konstanten Arbeitsablauf wichtig ist. Dabei kann die Füllphase zusätzlich durch eine Ansaugbewegung eines mit der Dosierungszelle zusammenwirkenden Verdrängungskörpers und die auf die Lebensmittelmasse wirkende Schwerkraft unterstützt werden. Der annähernd konstante Fülldruck in dem Vorratsbehälter kann z.B. dadurch bereitgestellt werden, daß die Lebensmittelmasse dem Vorratsbehälter mittels einer kontinuierlich fördernden Förderpumpe zugeführt wird. Die Förderpumpe kann dabei mit Ventilmitteln versehen sein, die bei Erreichen eines vorgegebenen Fülldrucks öffnen und überschüssige Lebensmittelmasse z.B. in einen Lagerbehälter zurückleiten. Vorzugsweise ist die Förderpumpe jedoch derart bemessen, daß in dem Vorratsbehälter zwischen der zugeführten Lebensmittelmasse und der an die Dosierungszelle abgegebenen Lebensmittelmasse ein Gleichgewicht besteht. Denkbar wäre dabei jedoch auch, die Förderpumpe abhängig von der benötigten Lebensmittelmasse zu regeln/steuern.

Um in dem Vorratsbehälter den annähernd konstanten Fülldruck aufrechtzuerhalten, kann der Vorratsbehälter in variabler Angrenzungsverbindung mit einer gegen konstante Kraft nachgiebigen beweglichen Trennwand gehalten sein. Es ist damit möglich, auch bei Verwendung von unstetig fördernden Förderpumpen in dem Vorratsbehälter einen annähernd konstanten Fülldruck bereitzustellen.

Um bei einfacher Gestaltung der Dosierungszelle die Taktzeiten niedrig zu halten, wird vorgeschlagen, daß die mindestens eine Dosierungszelle in einem Drehkörper bereitgestellt wird, welcher durch Drehung von dem Füllzustand in den Abgabezustand überführbar ist. Der Drehkörper kann dabei zylindrisch oder konusförmig ausgebildet sein und zwei L-förmig miteinander verbundene, um 90° versetzte Kanalabschnitte aufweisen. Durch das Drehen des Drehkörpers um jeweils 90° wird entweder die Verbindung zwischen dem Vorratsbehälter und der Dosierungszelle (Füllzustand) oder zwischen der Dosierungszelle und dem Formgebungskanal (Abgabezustand) hergestellt oder unterbrochen. Die Verkleinerung des Zellenvolumens kann z.B. mittels eines mit definiertem Verdrängungsvolumen in die Dosierungszelle eintretenden Verdrängungskörpers erfolgen. Der Verdrängungskörper kann in verschiedener Weise und in Anpassung an die jeweilige Form der Dosierungszelle ausgebildet werden. Vorzugsweise wird aber als Verdrängungskörper ein Schiebekolben verwendet, welcher mit einem hin- und hergehenden Kraftgerät in Verbindung steht und im Füllzustand an der Begrenzung der Dosierzelle teilnimmt und während der Abgabephase in die Dosierzelle eintaucht.

Weiterhin wird vorgeschlagen, daß eine Mehrzahl von Dosierzellen verwendet werden, welche über einzelne Zwischenkanäle an den verjüngten Formgebungskanal angeschlossen sind und über dessen am Zusammenfluß der Zwischenkanäle liegenden Eintrittsquerschnitt annähernd gleichmäßig verteilt sind.

Um zu verhindern, daß beim Abschneiden der einzelnen Formstücke am Ausgang des verjüngten Formgebungskanals ein Abbiegen oder Abbrechen des jeweils bereits abgeschnittenen Teils im Bereich der jeweils erreichten Einschnittstiefe eintritt, kann einerseits eine hohe Schnittgeschwindigkeit angewandt werden und andererseits darauf geachtet werden, daß die Einschnittstiefe und damit das Schwerkraftbiegemoment möglichst gering gehalten werden. Letzteres läßt sich bei unterschiedlicher Achslänge des Kanalausgangsquerschnitts in zwei zueinander orthogonalen Richtungen dadurch erreichen, daß die Bewegungsrichtung des Abschneideorgans im wesentlichen parallel zu der kürzeren Querschnittsachse liegt.

Weiterhin kann zur Erhaltung von über den Kanalausgangsquerschnitt annähernd konstanter Vorschubhöhe der Formgebungskanal in einem an den Ausgangsquerschnitt stromaufwärts angrenzenden Längenbereich annähernd konstante Querschnittsform und/oder -größe besitzen. Die jeweilige Lebensmittelmasse, insbesondere die Butter, tritt dann über den gesamten Querschnitt des Kanalausgangs mit annähernd konstanter Vorschubhöhe aus.

Um Verpackungsmaterial zu sparen und beim Endverbraucher eine einfache Handhabung der Formstücke zu gewährleisten, ist es möglich, daß die Formstücke am Ausgang der Kühlvorrichtung von dem Förderer im freien Fall in eine Folienpackung gegeben werden und diese Folienpackung durch Verklammern oder Verschweißen geschlossen wird. Der Endverbraucher, z.B. die Bäckerei, kann je nach Bedarf eine mit Formstücken gefüllte Folienpackung aus einer Kühleinrichtung bzw. einer Tiefkühleinrichtung entnehmen, die Verpackung aufreißen und die gekühlten bzw. tiefgekühlten Formstücke einfach - wie bei einer Chips-Tüte - entnehmen. Dabei kann die Folienpackung mit zusätzlichen Verschlußmitteln, wie z.B. einer Klebefolie, versehen sein, um nach Entnahme eines Teils der Formstücke aus der Folienverpackung diese wieder verschließen zu können und anschließend erneut der Kühleinrichtung bzw. Tiefkühleinrichtung zuzuführen.

Wenn die Folienverpackung als einzige Verpackung für die Formstücke dient, so kann sie mit entsprechenden Aufdrucken sowie beliebiger Farbgestaltung ausgeführt sein. Um jedoch bei einem anschließenden Transport in einem Kühlwagen, in dem große Mengen von gefüllten Folienpackungen gestapelt sind, sowie z.B. beim Be- und Entladen des Kühlwagens sicherzustellen, daß die Formstücke den Transport unbeschadet überstehen, wird empfohlen, daß die Folienpackungen in eine isolierende Außenverpackung, insbesondere eine Faltschachtel, gegeben werden.

Um eine leichte Verarbeitbarkeit der Lebensmittelmasse zu gewährleisten, ohne Gefahr zu laufen, daß die Lebensmittelmasse infolge einer Temperatureinwirkung an Qualität verliert, wird vorgeschlagen, daß im Falle der Lebensmittelmasse Butter diese mit einer Temperatur von ca. + 14°C in den Vorratsbehälter eingeführt wird. Bei dieser Temperatur weist die Butter optimale Verarbeitungseigenschaften bei gleichzeitig guter Haltbarkeit auf.

Im Hinblick auf gute Lagerfähigkeit und Handhabbarkeit der Formstücke wird vorgeschlagen, daß insbesondere im Falle der Lebensmittelmasse Butter diese in der Kühlvorrichtung auf eine Temperatur von ca. -12°C bis ca. -22°C, vorzugsweise ca. -18°C, heruntergekühlt wird. Bei dieser Temperatur überstehen die Butterformstücke unbeschadet das Abfüllen in die Folienpackungen sowie das manuelle Hantieren der Formstücke beim Endverbraucher, ohne Gefahr zu laufen, vorzeitig aufzuweichen.

Durch eine unterschiedliche Gestaltung des Formgebungskanals bzw. des Kanalausgangsquerschnitts können auf einfache Weise Formstücke mit unterschiedlichsten Umrissen erreicht werden. So können z.B. die Formstücke zur Belegung von Brezengebäck mit gekrümmtem Ringsegmentumriß hergestellt werden. Um auch größere Flächen, wie z.B. Baguette-Hälften, schnell und einfach bei gleichzeitiger optimaler Anpassung an unterschiedliche Belegflächen belegen zu können, wird vorgeschlagen, daß die Formstücke mit einem Rechteckumriß unterschiedlicher Seitenlänge hergestellt werden.

Weiterhin können die Formstücke mit einem kreisförmigen oder einem elliptischen Umriß hergestellt werden, um z.B. auch in Endbereichen von Baguettes oder Croissants eine optimale Anpassung der Formstücke an die jeweiligen Backwaren sicherzustellen.

Als Lebensmittelmassen kommen reine Butter oder modifizierte Butter mit Gewürz-, Farb- oder Kräuterzusätzen in Frage, daneben aber auch andere Streichfette. Auch können Brotaufstrichmassen auf Käsebasis oder Fleischbasis verarbeitet werden.

Das Verfahren zur Herstellung von flachen Formstücken ist jedoch nicht nur auf Brotaufstriche auf Butter- oder Käsebasis beschränkt. So ist es z.B. auch möglich, daß als Lebensmittelmasse eine Gebäckteigmasse verwendet wird. Dabei soll nicht ausgeschlossen sein, daß die fertigen Formstücke aus Gebäckteigmasse vor dem Abkühlen im Kühlkanal mit beliebigen Auflagen oder Überzügen versehen werden. Damit ist es z.B. möglich, vorgeformte Weihnachtsgebäck-Formstücke in tiefgekühlter Form herzustellen, die im Bedarfsfall vom Endverbraucher bzw. dem Bäcker z.B. ohne vorheriges Auftauen direkt einer Backeinrichtung zugeführt werden können.

Mit dem erfindungsgemäßen Verfahren sind Lebensmittelmasse-Formstücke aus Streichfett oder Lebensmittelmasse ähnlicher Konsistenz in Form einer Flachscheibe herstellbar mit einer Dicke annähernd entsprechend einer beim Bestreichen von Brot üblichen Bestreichungsdicke und mit einem Flächeninhalt und einer Umrißform, geeignet zum Belegen von Gebäck, wobei das Formstück in tiefgekühltem Zustand für die Handhabung beim Belegen hinreichend starr ist. Die Dicke der Flachscheibe kann von ca. 1 mm bis ca. 4 mm, vorzugsweise ca. 2 mm bis ca. 3 mm betragen.

Solche Formstücke können, gleichgültig wie sie im einzelnen in der Molkerei hergestellt worden sind, an Weiterverarbeiter oder Haushalte ausgeliefert werden und können dort zum Belegen von Gebäckstücken, insbesondere Brotgebäckstücken, verwendet werden. Dabei ist sowohl an ein Belegen von Schnittflächen gedacht, als auch ein Belegen von Gebäckstückflächen, die im Zuge des Ausbackens entstanden sind.

Bevorzugt ist vorgesehen, daß das Formstück auf eine Temperatur von ca. -12 bis -22°C, vorzugsweise ca. -18°C, eingestellt ist. Im Einzelfall wird man auch unter Berücksichtigung des Transportwegs und der Transportverpackung die Temperatureinstellung so wählen, daß zum Zeitpunkt der Ankunft beim Endverarbeiter oder Endverbraucher noch eine Temperatur gewährleistet ist, die das Handhaben der Formstücke als starre, formbeständige Körper erlaubt.

Es ist möglich, daß das Formstück einen Flächeninhalt und eine Umrißform entsprechend einer Belegfläche von Kleinbrotgebäck, wie Semmeln, Brezen, Hörnchen, Croissants, Salzstangen und dgl. besitzt. In diesem Fall genügt jeweils ein Formstück, um die ganze Belegfläche zu belegen. Dies führt zu einer besonders rationellen Arbeitsweise im Betrieb des Endverarbeiters oder im Haushalt. Insbesondere bei annähernd genormten Gebäckstücken, wie Semmeln, erreicht man, daß deren jeweilige Belegfläche bzw. Schnittfläche vollflächig belegt wird. Auch können kleine Randabstände eingehalten werden, so daß ein Herausfließen des etwa in der Darbietungsphase weich werdenden Streichfetts aus dem Bereich der Belegfläche verhindert ist.

Wenn es gilt, größere Gebäckstücke bzw. deren Schnittfläche zu belegen, so ist vorgesehen, daß das Formstück einen Flächeninhalt und eine Umrißform besitzt, welche das Belegen der Belegflächen von Gebäck, wie Semmeln, Brezen, Hörnchen, Croissants, Salzstangen, Baguettes und dgl. in mosaikartiger Nebeneinanderstellung von mehr als einem, vorzugsweise 2 - 10 Formstücken, höchst vorzugsweise 2 - 7 Formstücken, gestatten.

Die zahlenmäßige Begrenzung, die als besonders bevorzugte Ausführungsform vorgeschrieben wird, ist von Bedeutung, um auch beim Belegen eines Gebäckstücks mit mehreren Formstücken noch ein rationelles Arbeiten zu ermöglichen. Die zahlenmäßige Begrenzung gibt somit im Zusammenhang mit der jeweiligen Gebäckgröße auch ein Maß für den Flächeninhalt und die Umrißform der Formstücke.

Zum Belegen von Langbrot und Stangenbrot, beispielsweise Baguettes, setzt man bevorzugt Formstücke mit rechteckiger Umrißform ein, und zwar insbesondere mit ungleicher Seitenlänge, so daß durch Wenden um 90°C in der Scheibenebene eine Anpassung an unterschiedliche Breiten verschiedener Belegflächen möglich wird.

Das Formstück kann weiterhin eine elliptische oder ovale Umrißform besitzen. Derart gestaltete Formstücke sind beispielsweise zum Belegen von ovalen oder elliptischen Brötchen oder Semmeln geeignet, wobei der Flächeninhalt wieder so bemessen sein kann, daß die jeweilige Belegfläche ganz oder nur bis in Randnähe belegt ist.

Für den Fall der Belegung von runden Brötchen oder Semmeln gibt man dem Formstück bevorzugt eine kreisrunde Umrißform, wobei der Flächeninhalt in Anpassung an die jeweilige Brötchen- bzw. Semmelgröße wieder so bemessen werden kann, daß je nach Wunsch entweder eine vollflächige Bedeckung oder eine Bedeckung bis kurz vor dem Rand des Brötchens eintritt.

Besonders schwierig ist die Belegung von Brezen, da diese ja im Bereich der Durchbrüche nicht belegt werden dürfen. Hier ist für langgestreckte Brezenbereiche vorgesehen, daß das Formstück eine langgestreckte, bandförmige Umrißform besitzt. Andererseits ist für gekrümmte Bereiche der Breze vorgesehen, daß das Formstück eine langgestreckte, in der Bandebene gekrümmte Bandumrißform besitzt.

Alle hier beschriebenen Formstücke können nach den vorangehenden Herstellungsangaben produziert werden.

Ein wesentlicher Vorteil der Formstücke ist, daß sie dank ihrer temperaturbedingten Starrheit ohne wesentliche Gefahr der Formzerstörung als ungeordnetes Haufwerk in ein Verpackungsgebinde gegeben werden können. Dabei können im jeweiligen Verpackungsgebinde auch verschiedene Formstücke gemischt sein. Werden in einem Großbetrieb eines Endverarbeiters beispielsweise in großem Umfang Brezen verarbeitet, so kann der Molkereibetrieb diesem Endverarbeiter für den Arbeitsbereich Brezen jeweils in einem Gebinde ein Gemisch verschiedener Formstücke anliefern in einem Zahlenverhältnis, welches dem Verbrauch an verschiedenen Formstücken pro Breze entspricht.

Die Verpackungsgebinde werden je nach der vorgesehenen Art des Transports und der Lagerung auf Stoßschutz und thermische Isolierung abgestimmt. Wenn mit schonender Handhabung auf dem ganzen Lebensweg der Formstücke zu rechnen ist, so genügt u.U. eine weiche Verpackung aus Folie oder Papier, wobei die Folienstärke und Papierstärke auf den Isolierbedarf abgestimmt sein können. Ist mit rauher Behandlung im Lager- und Transportbetrieb zu rechnen, so kann man die Formstücke in steifen Behältnissen aus Pappe, Karton oder hartem Kunststoff verpacken, wobei bei der jeweiligen Materialwahl wieder Rücksicht auch auf den Isolierbedarf genommen wird.

Denkbar ist es auch, die Formstücke - einzeln oder gemischt - in kombinierten Verpackungsgebinden abzufüllen, z.B. in Weichgebinden aus Papier oder Folie, die ihrerseits wieder in Steifbehältnisse aus Karton, Pappe oder hartem Kunststoff gegeben werden. Dabei können in diesen steifen Behältnissen jeweils mehrere Weichpackungen untergebracht sein.

Die beiliegenden Figuren erläutern die Erfindung anhand von Ausführungsbeispielen; es stellen dar:
- Fig. 1: eine perspektivische Ansicht eines Formstücks zur Belegung von Brezengebäck mit gekrümmtem Ringsegmentumriß;
- Fig. 2: eine schematische Darstellung der Vorrichtung zur Herstellung von flachen Formstücken mit angeschlossener Kühl- und Verpackungsvorrichtung sowie anschließender Auslieferung der Formstücke mittels eines Kühlwagens zu einer Bäckerei;
- Fig. 3: eine vergrößerte Darstellung der Vorrichtung zur Herstellung von flachen Formstücken samt angegliedertem Förderer von Fig. 2;
- Fig. 4: einen Schnitt nach Linie IV-IV der Fig. 3;
- Fig. 4a: einen Schnitt nach Linie IVa-IVa der Fig. 2;
- Fig. 5: eine Draufsicht auf eine in ihrer Hauptebene gespaltene Brezen mit aufgelegten Formstücken mit gekrümmtem Ringsegmentumriß;
- Fig. 6: eine Ansicht gemäß Fig.5 auf eine Semmel mit aufgelegten kreisförmigen Formstücken;
- Fig. 7: eine Ansicht gemäß Fig.5 auf ein Croissant mit aufgelegten Formstücken mit Rechteck- und Kreisumriß; und
- Fig. 8: eine Ansicht gemäß Fig.5 auf ein Baguette mit aufgelegten Formstücken mit Rechteck- und Kreisumriß.

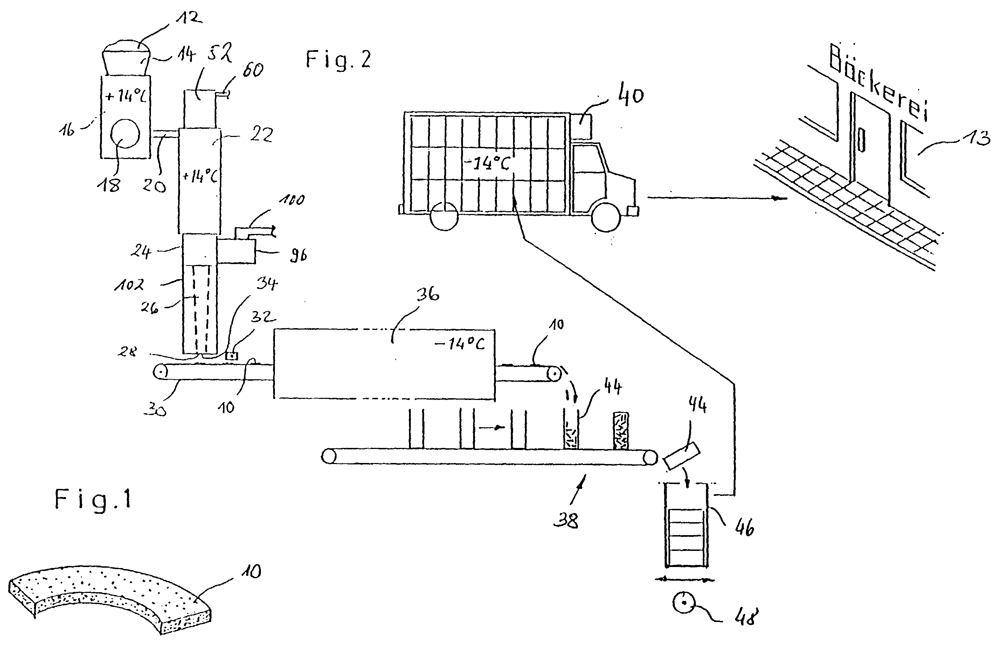

In Fig. 1 erkennt man ein flaches Formstück aus Butter, das zur Belegung von Brezengebäck mit gekrümmtem Ringsegmentumriß ausgebildet ist und allgemein mit 10 bezeichnet ist. Das Formstück kann je nach Gebäcksorte variierende Umrißform und nötigenfalls unterschiedlichen Flächeninhalt und unterschiedliche Dicke besitzen, um durch Nebeneinanderlegung nötigenfalls mit Spalten oder/und Überlappungen ein zu belegendes Gebäckstück annähern vollständig und mit minimalem Überstand zu bedecken. Um unterschiedlichen Verwendungszwecken gerecht zu werden, kann das Formstück aus einer Formmasse aus reiner Butter oder modifizierter Butter mit Gewürz-, Farb- oder Kräuterzusätzen und dgl. ausgebildet sein, oder aus anderem Streichfett. So ist es auch möglich, z.B. bei der Beschichtung von Brezen, gekrümmte bandförmige Formstücke mit variierender Länge oder/und variierender Bandbreite oder/und variierender Randkrümmung bereitzuhalten, um so eine optimale Anpassung der Formstücke an das jeweilige Gebäckstück zu erreichen.

Eine Anpassung an gewisse Gebäckstücksorten, wie Brezen, Brötchen, Semmeln, Croissants, Baguettes und dgl. wird insbesondere dadurch erleichtert, daß diese Arten von Gebäckstücken mittlerweile in der Regel halb- bzw. vollautomatisch in den jeweiligen Bäckereien hergestellt werden und so eine mögliche Variationsbreite gleicher Gebäckstücke stark eingeschränkt ist.

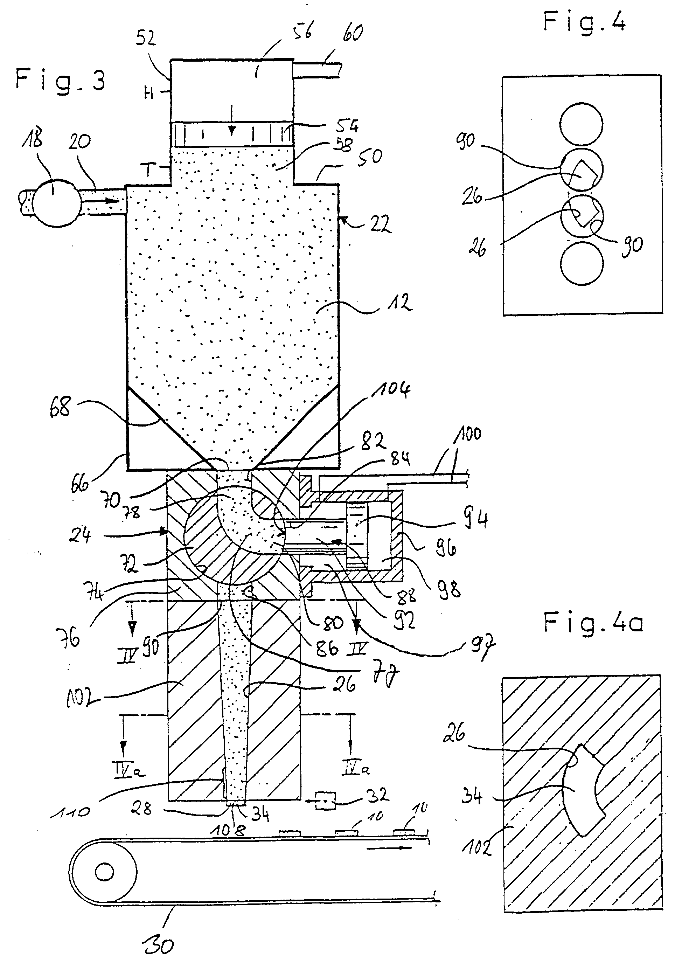

In Fig. 2 ist schematisch dargestellt, wie aus einer Lebensmittelmasse 12 die Formstücke 10 erzeugt werden und diese nach erfolgter Abkühlung und Verpackung an einen Endverbraucher in Gestalt einer Bäckerei 13 zur Weiterverarbeitung geliefert wird. Wie man erkennt, wird die Lebensmittelmasse 12, beispielsweise Butter, über einen Trichter 14 in einen Lagerbehälter 16 eingefüllt, in dessen Innenraum eine Temperatur der Butter von etwa + 14°C eingestellt wird. Aus diesem Lagerbehälter wird die Lebensmittelmasse 12 mittels einer Pumpe 18 und einer mit dieser verbundenen Rohrleitung 20 in einen Vorratsbehälter 22 gefördert. Wie man in Fig. 2 und 3 sieht, ist der Vorratsbehälter 22 mit einer Dosiervorrichtung 24 verbunden, an die sich ein Formgebungskanal 26 anschließt, der sich von der Dosiervorrichtung 24 zu einem Kanalausgang 28 hin verjüngt, welcher oberhalb eines Förderers bzw. eines Förderbands 30 angeordnet ist.

Dabei dient die Dosiervorrichtung 24 dazu, die in dem Vorratsbehälter 22 befindliche Lebensmittelmasse 12 portionsweise an den Formgebungskanal 26 abzugeben, um so am Kanalausgang 28 ein entsprechend definiertes Dosierungsvolumen mit vorgegebener Flächengestalt bzw. Volumen vorzulegen und den jeweiligen Vorschubüberstand durch eine kanalausgangsnah bewegte Schneidvorrichtung 32 abzuschneiden und zum freien Fall auf das Förderband 30 freizugeben. Die auf das Förderband 30 gelangten Formstücke 10 werden mit einem dem Kanalausgangsquerschnitt 24 entsprechenden Umriß und einer vorbestimmten Dicke einer Kühlvorrichtung 36 und anschließend einer Verpackungsvorrichtung 38 zugeführt. Wird Butter als Lebensmittelmasse 12 verwendet, so wird diese in der Kühlvorrichtung 36 vorzugsweise auf eine Temperatur von ca. -18°C heruntergekühlt. Die Temperatur von -18°C entspricht dabei denjenigen Temperaturen, die normalerweise in einem Transportwagen 40 für Tiefkühlkost aufrechterhalten werden, wenn die Formstücke 10 zu einem Endverbraucher, wie z.B. einer Bäckerei 13, transportiert werden.

Wenn die Formstücke 10 auf dem Förderband 30 liegend die Kühlvorrichtung 36 verlassen, werden sie im freien Fall oder über entsprechende Rutschen bzw. einen Trichter in aufreißbare Folienverpackungen 44 gefüllt, und diese Folienverpackungen 44 werden durch Verklammern oder Verschweißen geschlossen, wobei die Formstücke 10 in den jeweiligen Folienverpackungen 44 ggf. mit Schutzgas begast werden. Um sicherzustellen, daß die Folienverpackungen 44 gleichmäßig mit einer vorbestimmten Menge an Formstücken 10 bestückt werden, kann die Verpackungsvorrichtung 38 vorzugsweise mit einer Wiege- bzw. Zählvorrichtung versehen sein. Häufig genügt aber die Vorgabe einer bestimmten Fülldauer, wenn mit einer annähernd konstanten Verarbeitungsleistung der Portioniervorrichtung 24 gerechnet werden kann. Die Folienverpackungen 44 werden nach dem Verschließen in isolierende Außenverpackungen 46, insbesondere Faltschachteln, gegeben, welche während des Transports zur Bäckerei 13 einen Schutz vor Beschädigung und Temperaturschwankungen, z.B. beim Ausladen bzw. Einlagern der Formstücke 10 in der Bäckerei 13, gewährleisten.

In Fig. 3 sieht man den Vorratsbehälter 22, der zur Aufnahme der Lebensmittelmasse 12 dient. Um in dem Vorratsbehälter 22 einen annähernd konstanten Fülldruck aufrechtzuerhalten, ist der Vorratsbehälter 22 im Bereich seines oberen Endes 50 mit einem Ausgleichszylinder 52 versehen, in dem ein Trennkolben 54 verschieblich aufgenommen ist. Der Ausgleichszylinder 52 und der Trennkolben 54 schließen einen gasgefüllten Arbeitsraum 56 ein, der durch den Trennkolben 54 gegenüber dem Vorratsraum 58 des Vorratsbehälters 22 abgedichtet ist. Der gasgefüllte Arbeitsraum 56 steht über eine Rohrleitung 60 mit einem nicht dargestellten Druckerzeuger in Verbindung, der in dem gasgefüllten Arbeitsraum 56 einen konstanten Gasdruck bereitstellt.

Wie man in Fig. 3 sieht, ist der Vorratsbehälter 22 im Bereich seines unteren Endes 66 mit einem Einlauftrichter 68 versehen, welcher sicherstellt, daß die Lebensmittelmasse 12 aus dem Vorratsbehälter 22 direkt in die Einlauföffnung 70 der Dosiervorrichtung 24 fließt.

Die Dosiervorrichtung 24 besteht im wesentlichen aus einem zylindrischen Drehkörper 72, der in einer entsprechend ausgebildeten Drehkörperaufnahme 74 eines Drehkörpergehäuses 76 aufgenommen ist. Der Drehkörper 72 besitzt zwei L-förmig miteinander verbundene, um 90° versetzte Kanalabschnitte 78 und 80, die gemeinsam eine Dosierungszelle 77 ausbilden. In dem Drehkörpergehäuse 76 sind drei ebenfalls um 90° versetzte Anschlüsse 82, 84 und 86 vorhanden, so daß durch Drehen des zylindrischen Drehkörpers 72 dessen Kanalabschnitte 78, 80 entweder die Verbindung zwischen den Anschlüssen 82 und 84 oder zwischen den Anschlüssen 84 und 86 und einem mit dem Anschluß 86 verbundenen Auslauf 90 herstellen oder unterbrechen.

Als Verdrängungskörper 88 wird vorzugsweise ein Schiebekolben 92 verwendet, der an seinem drehkörperfernem Ende mit einem Kolben 94 verbunden ist, welcher in einem Arbeitszylinder 96 aufgenommen ist und durch Druckbeaufschlagung eines drehkörpernahen Arbeitsraums 97 bzw. eines drehkörperfernen Arbeitsraums 98 hin- und hergeschoben werden kann. Die Druckbeaufschlagung erfolgt dabei über zwei Druckleitungen 100, welche mit einem nicht dargestellten Druckerzeuger sowie einer Regel-/Steuereinrichtung zur Steuerung des Schiebekolbens 92 verbunden sind.

An den Auslauf 90 der Dosiervorrichtung 24 schließt sich der oben erwähnte Formgebungskanal 26 an, der in einem Formgebungskanalkörper 102 ausgebildet ist und sich von dem Auslauf 90 zu einem Kanalausgang 28 hin verjüngt, wobei der Formgebungskanal 26 in einem an den Kanalausgang 28 angrenzenden Längenbereich 110 annähernd konstante Querschnittsform und -größe besitzt.

Zur Herstellung der flachen Formstücke 10 aus Butter oder Lebensmittelmasse 12 ähnlicher Konsistenz wird mittels der Förderpumpe 18 Lebensmittelmasse 12 aus dem Lagerbehälter 16 über die Rohrleitung 20 in den Vorratsbehälter 22 gefördert, bis in dem Vorratsbehälter 22 ein annähernd konstanter Fülldruck herrscht. Dieser Fülldruck wird, wie oben beschrieben, zum einen durch die vorzugsweise kontinuierlich fördernde Förderpumpe 18 und den unter konstanter Kraft gehaltenen Trennkolben 54 bereitgestellt.

Befindet sich der Drehkörper 72 in der Füllstellung gemäß Fig. 3, so wird die in dem Vorratsbehälter 22 aufgenommene Lebensmittelmasse 12 infolge des herrschenden Überdrucks durch die Einlauföffnung 70 und den Anschluß 82 in die Dosierungszelle 77 gedrückt, bis die Dosierzelle vollständig gefüllt ist. Dabei kann eine Be- und Entlüftungsmöglichkeit für den Zelleninnenraum bestehen.

Wenn die Dosierungszelle 77 vollständig mit Lebensmittelmasse 12 gefüllt ist, wird der Drehkörper 72 durch eine Drehung um 90° im Uhrzeigersinn aus der Füllstellung in die Abgabestellung umgestellt. In dieser Stellung wird der Schiebekolben 92 in die Dosierungszelle 77 des Drehkörpers 72 um eine definierte Strecke entsprechend einem definierten Verdrängungsvolumen eingeschoben, so daß ein entsprechend definiertes Dosierungsvolumen der Lebensmittelmasse 12 aus der Dosierungszelle 77 in den Formgebungskanal 26 ausgeschoben wird.

Der Formgebungskanal 26 ist dabei derart auf die rheologischen Eigenschaften der Lebensmittelmasse 12 abgestimmt, daß am Kanalausgang 28 in jeder Verdrängungsphase eine Vorschubscheibe 108 entsteht, welche über den gesamten Querschnitt des Kanalausgangs 28 annähernd konstante Vorschubhöhe besitzt, wobei der Formgebungskanal 26 zur Erhaltung der annähernd konstanten Vorschubhöhe in einem an dem Ausgangsquerschnitt 34 angrenzenden Längenbereich 110 annähernd konstante Querschnittsform und Größe besitzt. Die Vorschubscheibe 108 wird nach jeweils mindestens einer Verdrängungsphase durch einen Schneiddraht der Schneidvorrichtung 32 abgeschnitten und, wie bereits oben beschrieben, zum freien Fall auf das Förderband 30 freigegeben.

Anschließend wird der Verdrängungskörper 88 aus der Dosierungszelle 77 zurückgezogen, bis sich der Schiebekolben 92 außerhalb des Drehbereichs des Drehkörpers 72 befindet. Nun wird der Drehkörper 72 um 90° entgegen dem Uhrzeigersinn gedreht, bis die Dosierungszelle 77 wieder mit dem Vorratsbehälter 22 in Verbindung steht.

Wie man in Fig. 4 sieht, ist es möglich, eine Mehrzahl von Dosiervorrichtungen 24 zu verwenden, welche gemeinsam an den verjüngten Formgebungskanal 26 angeschlossen sind, über den Eintrittsquerschnitt annähernd gleichmäßig verteilt sind und synchron betrieben werden.

Dadurch, daß gemäß Fig. 4 die Ausläufe 90 mehrerer Dosiervorrichtungen annähernd gleichmäßig über den Querschnitt des oberen Endes des Formgebungskanals 26 verteilt sind, wird eine annähernd gleichmäßige Beschickung des Formgebungskanals an der Stelle bewirkt, wo die Ausläufe 90 in den Formgebungskanal 26 einmünden.

Durch die Verjüngung des Formgebungskanals 26 wird bewirkt, daß der Formgebungskanal im wesentlichen luftfrei gehalten wird und die einzelnen Stromfäden aus dem Auslauf 90 zu einem einzigen Strang zusammenwachsen. Da man am Ausgang des Formgebungskanals 26 einen Vorschubüberstand möglichst konstanter Dicke auf dem ganzen Ausflußquerschnitt des Formgebungskanals 26 erreichen will, wird man versuchen, die Strömungsgeschwindigkeit im unteren Teil des Formgebungskanals 26 möglichst über den ganzen Querschnitt zu egalisieren.

Dies kann man dadurch erreichen, daß man am unteren Ende des Formgebungskanals 26 in dem Bereich 110 eine im wesentlichen querschnittskonstante Folge von Querschnitten vorsieht.

Der in Fig. 4a dargestellte Querschnitt entspricht bereits im wesentlichen dem Ausflußquerschnitt am unteren Ende des Formgebungskanals 26, der in geometrisch ähnlicher Form noch verkleinert wird.

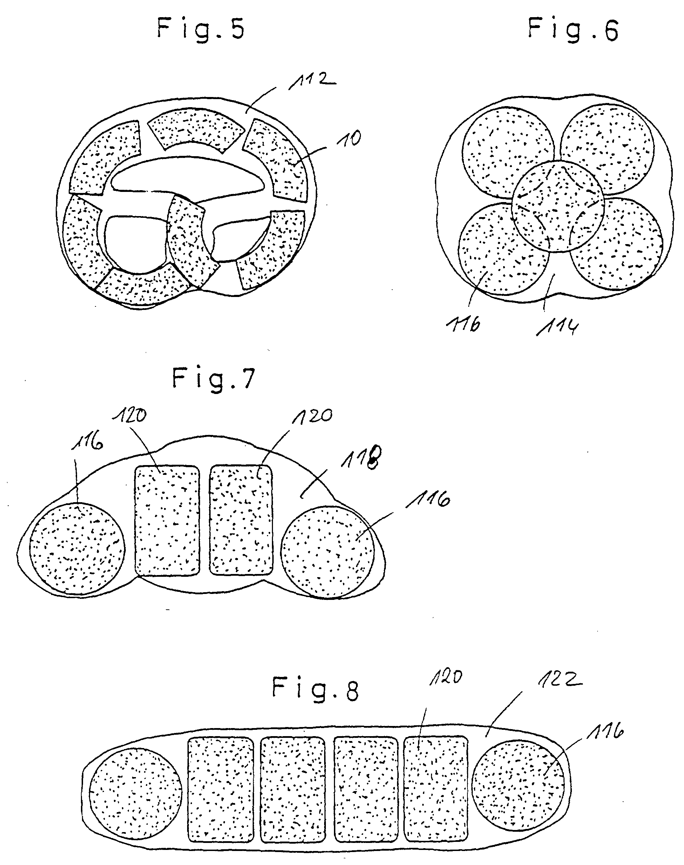

In Fig. 5 erkennt man eine Brezen 112, welche mit Formstücken 10 mit gekrümmtem Ringsegmentumriß belegt ist. Die Formstücke 10 entsprechen im wesentlichen hinsichtlich ihres Randverlaufs und ihrer Bandbreite der zu beschichtenden Fläche des jeweiligen bogenförmigen Brezenabschnitts. Bei Bedarf ist es auch möglich, Brezen mit gekrümmten, bandförmigen Formstücken 10 variierender Länge, Bandbreite und Randkrümmung zu belegen, um die jeweils zu beschichtende Fläche mit einem Minimum an Formstücken 10 und ohne wesentlichen Formstücküberstand im wesentlichen vollständig zu bedecken.

In Fig. 6 sieht man ein Brötchen 114, das mit Formstücken 116 von annähernd kreisrundem Umriß belegt ist. Bei entsprechender Abmessung der Formstücke braucht zur Belegung eines Brötchens 114 jeweils nur ein kreisrundes Formstück 116 verwendet zu werden, welches im wesentlichen an den Umriß des Brötchens 114 angepaßt ist.

In Fig. 7 sieht man ein Croissant 116, das in seinem Mittenbereich mit zwei rechteckigen Formstücken 120 belegt ist und in den jeweiligen Endbereichen mit zwei kreisrunden Formstücken 116 belegt ist. Man kann sich auch vorstellen, im Mittelbereich nur ein Formstück 120 aufzulegen, jedoch in einer um 90° gedrehten Lage.

In Fig. 8 erkennt man ein Baguette 122, das in seinem Mittelbereich mit 4 rechteckigen Formstücken 120 und in seinem jeweiligen Randbereich mit runden Formstücken 116 belegt ist.

Die Formstücke 10, 116 und 120 sind im wesentlichen dafür gedacht, zwischen einander zugekehrten Flächen sandwichartig aufeinander liegender Gebäckschichten eingelegt zu werden. Dabei besitzen die Formstücke vorzugsweise eine Schichtdicke von 1 mm - 4 mm, höchst vorzugsweise 2 mm - 3 mm. Abhängig von der zu belegenden Gebäckart können jedoch Formstücke mit beliebigem Außenumfang und beliebiger Dicke bereitgestellt werden.

## Patentansprüche

1. Verfahren zur Herstellung von flachen Formstücken (10, 116, 120) aus Butter oder Lebensmittelmassen (12) ähnlicher Konsistenz, insbesondere zum Belegen von Gebäckstücken, durch Ausformen der Formstücke (10, 116, 120) und anschließendes Abkühlen der Formstücke (10, 116, 120) bis auf einen Erstarrungszustand, in welchem die Formstücke (10, 116, 120) als feste Körper händisch oder maschinell handhabbar sind, welches Verfahren die folgenden Schritte umfasst, in denen:
- die jeweilige Lebensmittelmasse (12) aus einem Vorratsbehälter (22) in mindestens eine Dosierungszelle (77) bis zu deren annähernd vollständigen Füllung während einer Zellenfüllphase eingefüllt wird, während die Dosierungszelle (77) einen Füllzustand einnimmt, in dem sie mit dem Vorratsbehälter (22) in Füllverbindung steht, im übrigen aber im wesentlichen geschlossen ist,
- hierauf während einer Umstellphase die Dosierungszelle (77) in einen Abgabezustand umgestellt wird, in dem sie in Abgabeverbindung mit einem von der Dosierungszelle (77) zu einem Ausflußquerschnitt (34) hin verjüngten Formgebungskanal (26) steht, im übrigen aber wieder im wesentlichen vollständig geschlossen ist,
- nach Erreichen dieses Abgabezustands während einer Ausstoßphase durch Verkleinerung des Zellenvolumens ein entsprechendes Dosierungsvolumen der Lebensmittelmasse (12) aus der Dosierungszelle (77) in den Formgebungskanal (26) ausgestoßen wird,
- der Formgebungskanal (26) derart auf die rheologischen Eigenschaften der Lebensmittelmasse (12) abgestimmt wird, daß am Kanalausgang (28) in jeder Verdrängungsphase ein Vorschubüberstand (108) entsteht, welcher über den gesamten Querschnitt (34) des Kanalausgangs (28) annähernd konstante Vorschubhöhe besitzt,
- der jeweilige Vorschubüberstand durch ein sich in oder nahe der Kanalausgangsfläche bewegendes Schneidorgan (32) nach jeweils mindestens einer Verdrängungsphase abgeschnitten wird und zur Fallbewegung auf einen Förderer (30) freigegeben wird, und
- die so auf den Förderer gelangenden Formstücke (10, 116, 120) mit einem dem Kanalausgangsquerschnitt (34) entsprechenden Umriß und einer der Vorschubhöhe oder einem Vielfachen der Vorschubhöhe entsprechenden Dicke einer Kühlvorrichtung (36) zugeführt werden, nach Abkühlen aus der Kühlvorrichtung (36) entnommen und unter Beibehaltung des Erstarrungszustands in Richtung auf einen Verwendungsort transportiert werden.

2. Verfahren nach Anspruch 1,
**dadurch gekennzeichnet,**
**daß** in dem Vorratsbehälter (22) ein annähernd konstanter Fülldruck aufrechterhalten wird.

3. Verfahren nach Anspruch 1 oder 2,
**dadurch gekennzeichnet,**
**daß** die Lebensmittelmasse (12) mittels einer kontinuierlich fördernden Förderpumpe (18) dem Vorratsbehälter (22) zugeführt wird.

4. Verfahren nach einem der Ansprüche 1 - 3,
**dadurch gekennzeichnet,**
**daß** der Vorratsbehälter (22) in variabler Angrenzungsverbindung mit einer gegen konstante Kraft nachgiebigen beweglichen Trennwand (54) gehalten wird.

5. Verfahren nach einem der Ansprüche 1 - 4,
**dadurch gekennzeichnet,**
**daß** die mindestens eine Dosierungszelle (77) in einem Drehkörper (72) bereitgestellt wird, welcher durch Drehung von dem Füllzustand in den Abgabezustand überführbar ist.

6. Verfahren nach einem der Ansprüche 1 - 5,
**dadurch gekennzeichnet,**
**daß** die Verkleinerung der Zellenvolumens mittels eines mit definiertem Verdrängungsvolumen in die Dosierzelle (77) eintretenden Verdrängungskörpers (88) erfolgt.

7. Verfahren nach Anspruch 6,
**dadurch gekennzeichnet,**
**daß** als Verdrängungskörper (88) ein Schiebekolben (92) verwendet wird, welcher mit einem eine hin und her gehenden Kraftgerät (94, 96) in Verbindung steht und im jeweiligen Füllzustand an der Begrenzung der Dosierzelle (77) teilnimmt und in der jeweiligen Abgabephase in die Dosierzelle (77) eintaucht.

8. Verfahren nach einem der Ansprüche 1 - 7,
**dadurch gekennzeichnet,**
**daß** eine Mehrzahl von Dosierzellen (77) verwendet werden, welche über einzelne Zwischenkanäle an den verjüngten Formgebungskanal (26) angeschlossen sind und über dessen am Zusammenfluß der Zwischenkanäle liegenden Eintrittsquerschnitt annähernd gleichmäßig verteilt sind.

9. Verfahren nach einem der Ansprüche 1 - 8,
**dadurch gekennzeichnet,**
**daß** bei unterschiedlicher Achslänge des Kanalausgangsquerschnitts (34) in zwei zueinander orthogonalen Richtungen die Bewegungsrichtung des Abschneideorgans (32) im wesentlichen parallel zu der kürzeren Querschnittsachse liegt.

10. Verfahren nach einem der Ansprüche 1 - 9,
**dadurch gekennzeichnet,**
**daß** zur Erhaltung annähernd konstanter Vorschubhöhe der Formgebungskanal (26) in einem an den Ausgangsquerschnitt (34) stromaufwärts angrenzenden Längenbereich (110) annähernd konstante Querschnittsform und/oder -größe besitzt.

11. Verfahren nach Anspruch 1 - 10,
**dadurch gekennzeichnet,**
**daß** der Transport in Richtung Verwendungsort dadurch eingeleitet wird, daß die Formstücke (10, 116, 120) am Ausgang der Kühlvorrichtung (36) von dem Förderer (30) im freien Fall in eine Folienpackung (44) gegeben werden.

12. Verfahren nach Anspruch 11,
**dadurch gekennzeichnet,**
**daß** die Folienpackungen (44) in eine isolierende Außenverpackung (46), insbesondere eine Faltschachtel (46), gegeben werden.

13. Verfahren nach einem der Ansprüche 1 - 12,
**dadurch gekennzeichnet,**
**daß** im Falle der Lebensmittelmasse (12) Butter diese mit einer Temperatur von ca. + 14°C in den Vorratsbehälter (22) eingeführt wird.

14. Verfahren nach einem der Ansprüche 1 - 13,
**dadurch gekennzeichnet,**
**daß** die Lebensmittelmasse (12) in der Kühlvorrichtung (36) auf eine Temperatur von ca. -12°C bis -22°C, vorzugsweise ca. -18°C heruntergekühlt wird.

15. Verfahren nach einem der Ansprüche 1 - 14,
**dadurch gekennzeichnet,**
**daß** die Formstücke (10) zur Belegung von Brezengebäck (112) mit gekrümmtem Ringsegmentumriß hergestellt werden.

16. Verfahren nach einem der Ansprüche 1 - 14,
**dadurch gekennzeichnet,**
**daß** die Formstücke (120) mit einem Rechteckumriß unterschiedlicher Seitenlänge hergestellt werden.

17. Verfahren nach einem der Ansprüche 1 - 14,
**dadurch gekennzeichnet,**
**daß** die Formstücke (116) mit einem kreisförmigen oder einem elliptischen Umriß hergestellt werden.

18. Verfahren nach einem der Ansprüche 1 - 17,
**dadurch gekennzeichnet,**
**daß** als Lebensmittelmasse (12) ein Streichfett, insbesondere reine Butter oder modifizierte Butter mit Gewürz-, Farb- oder/und Kräuterzusätzen verarbeitet wird.

19. Verfahren nach einem der Ansprüche 1 - 17,
**dadurch gekennzeichnet,**
**daß** als Lebensmittelmasse (12) eine Brotaufstrichmasse auf Käsebasis oder Fleischbasis verarbeitet wird.

20. Verfahren nach einem der Ansprüche 1 bis 17,
**dadurch gekennzeichnet,**
**daß** als Lebensmittelmasse eine Gebäckteigmasse verarbeitet wird.

## Claims

1. Process for producing flat shaped blocks (10, 116, 120) of butter or foodstuff (12) of similar consistency, in particular for spreading on baked goods, by forming the shaped blocks (10, 116, 120) and then cooling the shaped blocks (10, 116, 120) to a solidified state, in which the shaped blocks (10, 116, 120) can be handled manually or mechanically as solids, which process comprises the following steps, in which:
- the respective foodstuff (12) is introduced from a supply container (22) into at least one apportioning cell (77), until the latter is more or less completely filled, during a cell-filling phase, the apportioning cell (77) assuming a filling state, in which it is in filling connection with the supply container (22) but is otherwise essentially closed,
- thereafter, during a changeover phase, the apportioning cell (77) is changed over into a discharging state, in which it is in discharging connection with a shaping channel (26), which is tapered from the apportioning cell (77) to an outflow cross section (34), but is otherwise, once again, essentially completely closed,
- once this discharging state has been reached, during an ejecting phase, a reduction in the cell volume causes a corresponding apportioning volume of the foodstuff (12) to be ejected from the apportioning cell (77) into the shaping channel (26),
- the shaping channel (26) is coordinated with the rheological properties of the foodstuff (12) such that an advancement overhang (108) is produced at the channel outlet (28) in each displacement phase, this overhang having a more or less constant advancement height over the entire cross section (34) of the channel outlet (28),
- the respective advancement overhang is cut off by a cutting member (32), which moves in or in the vicinity of the channel-outlet surface, following in each case at least one displacement phase and is released in order to fall onto a conveyor (30), and
- the shaped blocks (10, 116, 120) which pass onto the conveyor in this way, and have an outline corresponding to the channel-outlet cross section (34) and a thickness corresponding to the advancement height or a multiple of the advancement height, are fed to a cooling arrangement (36), are removed from the cooling arrangement (36) once cooled and, with the solidified state being maintained, are transported in the direction of a use location.

2. Process according to Claim 1, **characterized in that** a more or less constant filling pressure is maintained in the supply container (22).

3. Process according to Claim 1 or 2, **characterized in that** the foodstuff (12) is fed to the supply container (22) by means of a continuously delivering delivery pump (18).

4. Process according to one of Claims 1 - 3, **characterized in that** the supply container (22) is retained in variable adjacent connection with a movable partition wall (54), which is compliant in respect of constant force.

5. Process according to one of Claims 1 - 4, **characterized in that** the at least one apportioning cell (77) is provided in a body of rotation (72), which can be transferred by rotation from the filling state into the discharging state.

6. Process according to one of Claims 1 - 5, **characterized in that** the cell volume is reduced by means of a displacement body (88) entering with a defined displacement volume into the apportioning cell (77).

7. Process according to Claim 6, **characterized in that** the displacement body (88) used is a sliding piston (92) which is connected to a reciprocating power unit (94, 96) and, in the respective filling state, forms part of the boundary of the apportioning cell (77) and, in the respective discharging state, penetrates into the apportioning cell (77).

8. Process according to one of Claims 1 - 7, **characterized in that** use is made of a plurality of apportioning cells (77) which are connected to the tapered shaping channel (26) via individual intermediate channels and are more or less uniformly distributed over the inlet cross section of the shaping channel, said inlet cross section being located where the intermediate channels converge.

9. Process according to one of Claims 1 - 8, **characterized in that**, with a different axial length of the channel-outlet cross section (34) in two mutually orthogonal directions, the movement direction of the cutting-off member (32) is located essentially parallel to the shorter cross-sectional axis.

10. Process according to one of Claims 1 - 9, **characterized in that**, in order to achieve a more or less constant advancement height, the shaping channel (26) has a more or less constant cross-sectional shape and/or size in a length region (110) which is adjacent to the outlet cross section (34), upstream of the latter.

11. Process according to Claims 1 - 10, **characterized in that** transportation in the direction of a use location is initiated **in that**, at the outlet of the cooling arrangement (36), the conveyor (30) causes the shaped blocks (10, 116, 120) to free-fall into a sheet-material pack (44).

12. Process according to Claim 11, **characterized in that** the sheet-material packs (44) are passed into insulating outer packaging (46), in particular a folding box (46).

13. Process according to one of Claims 1 - 12, **characterized in that**, in the case of the foodstuff (12) being butter, the latter is introduced into the supply container (22) at a temperature of approximately +14°C.

14. Process according to one of Claims 1 - 13, **characterized in that** the foodstuff (12) is cooled down in the cooling arrangement (36) to a temperature of approximately -12°C to -22°C, preferably approximately -18°C.

15. Process according to one of Claims 1 - 14, **characterized in that** the shaped blocks (10), for spreading on pretzels (112), are produced with a curved ring-segment outline.

16. Process according to one of Claims 1 - 14, **characterized in that** the shaped blocks (120) are produced with a rectangular outline with different side lengths.

17. Process according to one of Claims 1 - 14, **characterized in that** the shaped blocks (116) are produced with a circular or an elliptical outline.

18. Process according to one of Claims 1 - 17, **characterized in that** the foodstuff (12) processed is a spreadable fat, in particular pure butter or modified butter with added spices or condiments, colorants and/or herbs.

19. Process according to one of Claims 1 - 17, **characterized in that** the foodstuff (12) processed is a cheese-based or meat-based sandwich spread.

20. Process according to one of Claims 1 - 17, **characterized in that** the foodstuff processed is a baking mixture.

## Revendications

1. Procédé de fabrication de pièces façonnées plates (10, 116, 120) à partir de beurre ou de matières alimentaires (12) de consistance similaire, en particulier pour garnir des biscuits, par démoulage des pièces façonnées (10, 116, 120) et refroidissement consécutif des pièces façonnées (10, 116, 120) jusqu'à un état de solidification dans lequel les pièces façonnées (10, 116, 120) peuvent être manipulées à la main ou à la machine en tant que corps solides, lequel procédé comprend les étapes suivantes dans lesquelles :
- la matière alimentaire (12) respective est versée à partir d'un réservoir de stockage (22) dans au moins une cellule de dosage (77), jusqu'à ce qu'elle soit à peu près entièrement remplie, pendant une phase de remplissage de la cellule, tandis que la cellule de dosage (77) adopte un état de remplissage, dans lequel elle est en relation de remplissage avec le réservoir de stockage (22), mais est en outre essentiellement fermée,
- après quoi, pendant la phase de permutation, la cellule de dosage (77) est permutée dans un état de distribution dans lequel elle est en relation de distribution avec un canal de formage (26) s'effilant de la cellule de dosage (77) à une coupe transversale d'écoulement (34), mais est en outre à nouveau entièrement fermée pour l'essentiel,
- après que cet état de distribution a été atteint, pendant une phase d'éjection par réduction du volume de la cellule, un volume de dosage correspondant en matière alimentaire (12) est éjecté dans le canal de formage (26) à partir de la cellule de dosage (77),
- le canal de formage (26) est adapté aux propriétés rhéologiques de la matière alimentaire (12) de telle sorte qu'il apparaît, au niveau de la sortie de canal (28), dans chaque phase de refoulement, une saillie d'avancement (108), laquelle possède une hauteur d'avancement à peu près constante sur l'ensemble de la coupe transversale (34) de la sortie de canal (28),
- la saillie d'avancement respective est coupée par un organe de découpe (32), se déplaçant dans la surface de la sortie de canal ou à sa proximité, après respectivement au moins une phase de refoulement, et est relâchée sur un convoyeur (30) pour le mouvement de chute et,
- les pièces façonnées (10, 116, 120), arrivant de cette manière sur le convoyeur (30), avec un contour correspondant à la coupe transversale d'écoulement (34) et une épaisseur correspondant à la hauteur d'avancement ou à un multiple de la hauteur d'avancement, sont amenées vers un dispositif de refroidissement (36), retirées après refroidissement du dispositif de refroidissement (36) et transportées en direction du lieu d'utilisation tout en conservant l'état de solidification.

2. Procédé selon la revendication 1, **caractérisé en ce que**, dans le réservoir de stockage (22), une pression de remplissage à peu près constante est maintenue.

3. Procédé selon la revendication 1 ou 2, **caractérisé en ce que** la matière alimentaire (12) est amenée vers le réservoir de stockage (22) au moyen d'une pompe d'alimentation (18) refoulant en continu.

4. Procédé selon l'une des revendications 1 à 3, **caractérisé en ce que** le réservoir de stockage (22) est maintenu dans une liaison adjacente variable avec une paroi de séparation (54) mobile déformable sous l'action d'une force constante.

5. Procédé selon l'une des revendications 1 à 4, **caractérisé en ce qu'**au moins une cellule de dosage (77) est disposée dans un organe de rotation (72), lequel peut être permuté, par rotation, de l'état de remplissage à l'état de distribution.

6. Procédé selon l'une des revendications 1 à 5, **caractérisé en ce que** la réduction du volume de la cellule se fait au moyen d'un élément de refoulement (88) pénétrant dans la cellule de dosage (77) avec un volume de refoulement défini.

7. Procédé selon la revendication 6, **caractérisé en ce qu'**on utilise un piston coulissant (92) en tant qu'élément de refoulement (88), lequel est en communication avec un appareil moteur (94, 96) faisant le va et vient et participe, à l'état de remplissage respectif, à la délimitation de la cellule de dosage (77) et s'enfonce dans la cellule de dosage (77) dans la phase de distribution respective.

8. Procédé selon l'une des revendications 1 à 7, **caractérisé en ce qu'**on utilise une multitude de cellules de dosage (77), lesquelles sont raccordées, par le biais de canaux intermédiaires individuels, au canal de formage effilé (26) et sont réparties, de manière à peu près homogène, sur sa coupe transversale d'entrée située au niveau du confluent des canaux individuels.

9. Procédé selon l'une des revendications 1 à 8, **caractérisé en ce que**, pour une longueur d'axe variable de la coupe transversale de la sortie de canal (34) en deux directions orthogonales l'une par rapport à l'autre, le sens du mouvement de l'organe de découpe (32) est pour l'essentiel parallèle à l'axe le plus court de la coupe transversale.

10. Procédé selon l'une des revendications 1 à 9, **caractérisé en ce que**, pour maintenir une hauteur d'avancement à peu près constante, le canal de formage (26) possède une forme et/ou taille de coupe transversale à peu près constante dans une zone longitudinale (110) adjacente, en amont, à la coupe transversale de sortie (34).

11. Procédé selon l'une des revendications 1 à 10, **caractérisé en ce que** le transport vers le lieu d'utilisation est déclenché par le fait que les pièces façonnées (10, 116, 120) sont déversées en chute libre par le convoyeur (30), au niveau de la sortie du dispositif de refroidissement (36), dans un emballage à film (44).

12. Procédé selon la revendication 11, **caractérisé en ce que** les emballages à film (44) sont déversés dans un emballage externe isolant (46), en particulier une boîte à rabats (46).

13. Procédé selon l'une des revendications 1 à 12, **caractérisé en ce que**, dans le cas de la matière alimentaire (12) beurre, ce dernier est introduit dans le réservoir de stockage (22) à une température d'environ + 14°C.

14. Procédé selon l'une des revendications 1 à 13, **caractérisé en ce que** la matière alimentaire (12) est refroidie dans le dispositif de refroidissement (36) à une température située entre environ -12°C et -22°C, environ -18°C de préférence.

15. Procédé selon l'une des revendications 1 à 14, **caractérisé en ce que** les pièces façonnées (10) sont fabriquées pour garnir des bretzels (112) avec un contour de segments d'anneau courbé.

16. Procédé selon l'une des revendications 1 à 14, **caractérisé en ce que** les pièces façonnées (120) sont fabriquées avec un contour rectangulaire avec une longueur latérale variable.

17. Procédé selon l'une des revendications 1 à 14, **caractérisé en ce que** les pièces façonnées (116) sont fabriquées avec un contour circulaire ou elliptique.

18. Procédé selon l'une des revendications 1 à 17, **caractérisé en ce que** l'on travaille, en tant que matière alimentaire (12), une matière grasse à étaler, en particulier du beurre pur ou du beurre modifié avec des ajouts d'épices, de colorants ou/et d'herbes.

19. Procédé selon l'une des revendications 1 à 17, **caractérisé en ce que** l'on travaille, en tant que matière alimentaire (12), une matière à tartiner à base de fromage ou de viande.

20. Procédé selon l'une des revendications 1 à 17, **caractérisé en ce que** l'on travaille une pâte à biscuit, en tant que matière alimentaire.
